# EUROPEAN PATENT SPECIFICATION

(11) **EP 4 024 224 B1**
(45) Date of publication and mention of the grant of the patent: **28.02.2024**
(21) Application number: 19934364.1
(22) Date of filing: 30.08.2019
(51) Int. Cl.: G06F 13/38, G06F 13/42

(54) **INTERFACE CONVERSION DEVICE**
SCHNITTSTELLENUMWANDLER
DISPOSITIF DE CONVERSION D'INTERFACE

(43) Date of publication of application: 06.07.2022
(73) Proprietor: Unitex Corporation, Machida-shi, Tokyo 194-0021 (JP)
(72) Inventor: MARUYAMA Tatsuya, Machida-shi, Tokyo 194-0021 (JP)
(74) Representative: Gislon, Gabriele
(86) International application number: PCT/JP2019/034090
(87) International publication number: WO 2021/038822

(56) References cited:
- JP-A- 2012 038 249
- JP-A- 2014 096 162
- JP-A- 2014 096 162
- JP-A- 2019 057 132
- JP-A- 2019 057 132
- US-A1- 2011 219 163
- US-A1- 2012 102 257
- US-B1- 8 127 059

## Description

### FIELD OF THE INVENTION

The present invention relates to an interface conversion device for connecting devices having different types of interfaces. Particularly, the present invention relates to an interface conversion device that enables to execute the transmission/reception of data appropriately.

### BACKGROUND OF THE INVENTION

Conventionally, it is known that some devices having different interfaces are communicated via the interface conversion device so as to execute the transmission/reception of data between devices (Patent Document 1). For example, one device is a host computer which has a USB (Universal Serial Bus) interface (hereinafter referred to as USB), the other device is a storage device which has a SAS (Serial Attached SCSI) interface (hereinafter referred to as SAS).

### PRIOR ART

### PATENT DOCUMENT

Patent Document 1: JP 2012-68808
Patent document 2, US 8 127 059, discloses an interface conversion device between a SAS and a SATA interface with transmission speed management.
Patent document 3, JP 2014 096162, discloses an interface conversion apparatus and an interface conversion method for connecting hardware having interfaces of different types, and in particular, is suitable when an error occurs in data transfer from one hardware to another hardware. Interface conversion apparatus and interface conversion method that enable efficient data retransfer.

### SUMMARY OF THE INVENTION

### PROBLEMS TO BE SOLVED BY THE INVENTION

The SAS is adopted as the interface of the storage device described in Patent Document 1. The SAS divides the data of a predetermined unit (for example, one block) into a predetermined size (for example, one frame) and transmits the divided data. Further, since the data communication speed of the SAS is faster than the data communication speed of the USB, the processing of the data reception by the USB cannot catch up with the processing of the data transmission by the SAS due to the difference in the data communication speed between the two interfaces. Therefore, the data processing may be delayed in USB.

In this way, when the data processing is delayed in the USB, when the data transmission standby time exceeds 1 ms, the storage device (SAS) interrupts the data transmission and retransmits the data from the beginning of the block. On the other hand, in this case, although the data processing status is delayed, the data reception state is continued in the USB. Therefore, even if the data transmitted once by the SAS is retransmitted from the beginning of the block, the USB appropriately receives the data as ongoingly transmitted data.

However, in such a case, since the host computer (USB) may already have had the received data, the host computer (USB) receives the retransmitted data which is partially overlapped with the received data when the data is retransmitted from the storage device (SAS). The overlapped data between the received data and the retransmitted data is unnecessary and inappropriate.
That is, in the above cases, it may not be possible to properly execute the transmission/reception of data.

Further, the operating system (OS) of a personal computer in recent years can control an external device connected to the personal computer via the USB to transit from a normal mode to a power-saving mode in order to reduce power consumption (hereinafter referred to as power-saving mode transition request).

If the host computer disclosed in Patent Document 1 is equipped with an operating system having such specifications, the interface conversion device (USB) connected to such host computer receives the power-saving mode transition request and transitions to the power-saving mode when a power-saving mode transition request is made to an external device (storage device).

Once the interface conversion device transitions to the power-saving mode, the power consumption is forcibly suppressed, so that it may not be possible to properly transmit and receive the data. Further, once the interface conversion device transitions to the power-saving mode, it cannot immediately return to the normal mode because it takes time for a series of processes (hereinafter referred to as return process) to return to the normal mode. Further, since the interface conversion device stagnates other processes due to the return process, it may not be possible to properly transmit and receive data even during the return process.

In order to solve the above problems, the present invention provides an interface conversion device for connecting devices having different interfaces, the interface conversion device capable of appropriately transmitting and receiving data from one device to the other device.

### MEANS FOR SOLVING THE PROBLEMS

According to the present invention, the interface conversion device can communicate between a first device having a first interface and a second device having a second interface, the data transmission speed of the second interface is faster than the data transmission speed of the first interface. The interface conversion device has a first transmission/reception part connecting to the first interface, a second transmission/reception part connecting to the second interface, a data storage part connecting to the second transmission/reception part, and storing the data transmitted from the second transmission/reception part, an information conversion part connecting to the first transmission/reception part and the data storage part and converting at least the data transmitted from the second interface stored in the data storage part so as to be compatible with the first interface, a first information acquisition part connecting to the first transmission/reception part and acquiring the information relating to the data transmission speed in the first interface, a transmission speed management part determining the data transmission speed in the second interface based on the information which the first acquisition part acquires. The transmission speed management part determines the first reference speed based on the type and version information of the first interface which the first information acquisition part acquires. Further, the transmission speed management part determines the actual data transmission speed of the first interface as the second reference speed. The transmission speed management part determines the optimum speed in the range of "the first reference speed -α ≦ the second reference speed ≦ the first reference speed + α". The α is a rate constant that enables the communication between the first interface and the second interface without the data transmission standby time of the second transmission/reception part exceeding 1 ms. The α is determined by the communication state between the first interface and the second interface, the specifications of the first interface and the second interface, and the like.

### ADVANTAGEOUS EFFECT OF THE INVENTION

According to the present invention, an interface conversion device is provided that the communication between a first device and a second device having an interface different from that of the first device enables to be executed, and the data can be appropriately transmitted and received from one device to the other device.

### BRIEF DESCRIPTION OF THE DRAWINGS

FIG. 1 is a block diagram showing an interface conversion device in a first embodiment of the present invention;
FIG. 2 is a flow diagram showing the procedure of the interface conversion method using the interface conversion device;
FIG. 3 is a flow diagram showing the processing procedure when receiving a power-saving mode transition request by using the interface conversion device;
FIG. 4 is a schematic diagram for explaining the transmission/reception of data, etc;
FIG. 5 is a block diagram showing the interface conversion device in a second embodiment of the present invention;
FIG. 6 is a block diagram showing the interface conversion device in a third embodiment of the present invention.

### EMBODIMENTS OF THE INVENTION

### (First Embodiment)

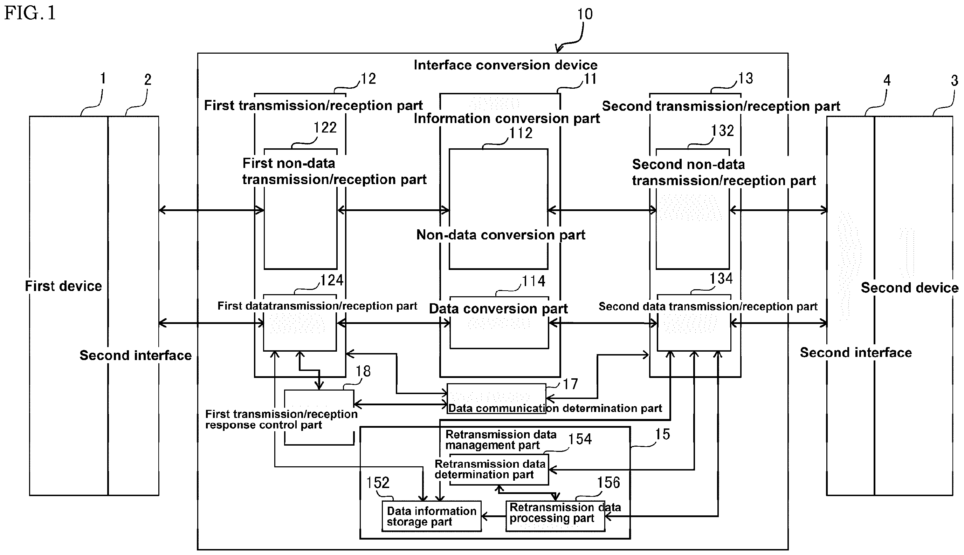

Hereinafter, the first embodiment of the present invention will be described with reference to FIGS. 1 to 4.

### (Interface conversion device 10)

The interface conversion device 10 of the embodiment makes it possible to convert to fit data, etc. transmitted from one interface (USB and SAS in this embodiment) into the method (protocol and format) of the other interface, which is different from the method of one interface, so that the other interface can receive data, etc. transmitted from one interface.

As shown in FIG. 1, the interface conversion device 10 is arranged between the first device 1 having the first interface 2 and the second device 3 having the second interface 4, and is connected to both devices. The first device 1 is, for example, a host computer, the first interface 2 is, for example, USB, the second device 3 is, for example, an LTO device (storage device), and the second interface 4 is, for example, SAS.

The interface conversion device 10 converts the data, etc. transmitted from the first interface 2 into a method suitable for the second interface 4, and converts the data, etc. transmitted from the second interface 4 into a method suitable for the first interface 2.

The interface conversion device 10 comprises an information conversion part 11 that converts data, etc., a first transmission/reception part 12 connected to the first interface 2 and the information conversion part 11, a second transmission/reception part 13 connected to the second interface 4 and the information conversion part 11, a retransmission data management part 15 connected to the first transmission/reception part 12 and the second transmission/reception part 13, a data communication determination part 17 connected to the first transmission/reception part 12 and the second transmission/reception part 13 and a first transmission/reception response control part (command rejection part) 18 connected to the first transmission/reception part 12.

In the present embodiment, USB is adopted as a communication standard for each communication between the first interface 2, the first transmission/reception part 12, and the information conversion part 11. USB divides data in a predetermined unit (for example, one block) into a packet units and transmits (transfers) it. In addition, bulk-only transfer (Bulk-Only Transport) is adopted as the data transfer protocol.

SAS is adopted as a communication standard as a communication between the second interface 4, the second transmission/reception part 13, and the information conversion part 11. SAS and data of a predetermined unit (for example, one block) is divided into frame units and transmitted (for example, one block). (Transferred).

SAS divides data in a predetermined unit (for example, one block) into a frame unit and transmits (transfers) it.

### (USB and SAS)

Here, the problem caused by the difference in the data transmission speed between SAS and USB is described. Since the data transmission speed of the SAS is faster than the data transmission speed of the USB, the USB that receives the transmission data from the SAS may delay the data processing.

As described above, when the data processing is delayed in the USB and the data transmission waiting time of the SAS exceeds 1 ms, the second device 3 interrupts the data transmission according to the SAS specifications, and retransmits the data from the beginning of the block of the data.

On the other hand, in this case, although the data processing is delayed, the USB continues the reception state due to the bulk transfer, so even if the data once transmitted by the SAS is retransmitted from the beginning of the block, the USB continues to properly receive that data as normally transmitted data.

However, in such a case, since the USB (host computer) may already have the received data, when the data is retransmitted from the SAS, the USB will improperly receive that data that is duplicated with the received data. The interface conversion device 10 solves the above problem.

Next, the information handled by USB and SAS is described.

The information handled by the USB includes a data packet in which is set in a predetermined field of data, a command packet of CBW (Command Block Wrapper), and a status packet of CSW (Command Status Wrapper).

The CBW is issued based on the read command of the first device 1, includes a command block in which a data transmission request, etc. is executed, and sets an arbitrary value for associating the CBW and the CSW in the field. The CSW is issued based on the completion of data transmission, etc., and includes the command execution result (for example, normal completion of the command, failure at the time of command execution) and the information, etc. for determining whether to perform bulk-in transmission or bulk-out transmission, and sets an arbitrary value for associating the CBW and the CSW in the field.

The information handled by SAS includes a data frame that sets the data in a predetermined field, a command frame that sets a command in a predetermined field, a response frame that sets a response in a predetermined field, etc. The data frame corresponds to a data packet, the command frame corresponds to CBW, and the response frame corresponds to CSW.

### (Information conversion part 11)

The information conversion part 11 converts the information conforming to the first interface 2 received from the first transmission/reception part 12 into the information conforming to the second interface 4. Further, the information conversion unit 11 converts the information regarding the second interface 4 received from the second transmission/reception part 13 into the information suitable for the first interface 2. That is, the information conversion part 11 converts the information of the method from USB to SAS or from SAS to USB.

The information conversion part 11 comprises a non-data conversion part 112 that converts information other than data such as commands and status information, etc. and a data conversion part 114 that converts data.

The non-data conversion part 112 executes a command conversion process such as converting the CBW into a command frame or converting the command frame into the CBW. Further, the non-data conversion part 112 executes a status information conversion process such as converting the CSW into the response frame or converting the response frame into a CSW.

The data conversion part 114 executes a data conversion process such as converting the data packet into the data frame or converting the data frame into the data packet.

### (First transmission/reception part 12)

The first transmission/reception part 12 comprises a first non-data transmission/reception part 122 that transmits/receives commands and status information (for example, CBW, CSW) related to USB, and a first data transmission/reception part 124 that transmits/receives data (for example, data packet) related to USB.

The first non-data transmission/reception part 122 receives the CBW transmitted from the first interface 2, and transmits the received CBW to the non-data conversion part 112 of the information conversion part 11. Further, the first non-data transmission/reception part 122 receives the CSW transmitted from the non-data conversion part 112, and transmits the received CSW to the first interface 2.

The first data transmission/reception part 124 receives the data packet transmitted from the first interface 2, and transmits the received data packet to the data conversion part 114 of the information conversion unit 11. Further, the first data transmission/reception part 124 receives the data packet transmitted from the data conversion part 114, and transmits the received data packet to the first interface 2.

### (Second transmission/reception part 13)

The second transmission/reception part 13 has a second non-data transmission/reception part 132 that transmits/receives the commands and the status information (for example, command frame, response frame) related to SAS, and a second data transmission/reception part 134 that transmits/receives the data (for example, data frame) related to SAS.

The second non-data transmission/reception part 132 receives the command frame transmitted from the non-data conversion part 112 of the information conversion part 11, transmits the received command frame to the second interface 4, and receives the response frame transmitted from the second interface 4, transmits the received response frame to the non-data conversion part 112 of the information conversion part 11.

The second data transmission/reception part 134 receives the data frame transmitted from the data conversion part 114 of the information conversion part 11, transmits the received data frame to the second interface 4, and receives the data frame transmitted from the second interface 4, transmits the received data frame to the data conversion part 114 of the information conversion part 11.

The data transmission speed of the first data transmission/reception part 124 is the same as that of the first interface (USB) 2, and the data transmission speed of the second data transmission/reception part 134 is the same as that of the second interface (SAS) 4. Further, the data conversion processing speed of the data conversion part 114 is equal to or faster than the data transmission speed of the second interface (SAS) 4, and the data conversion processing is executed at a speed that does not become a bottleneck in data transmission.

### (Retransmission data management part 15)

As described above, the retransmission data management part 15 has a data information storage part 152 connected to the first data transmission/reception part 124, a retransmission data determination part 154 connected to the transmission/reception part 13, and a retransmission data processing part 156 connected to the second transmission/reception unit 13, the data information storage part 152 and the retransmission data determination part 154, in order to appropriately process the data retransmitted from the second interface 4.

### (Data information storage part 152)

The data information storage part 152 counts (stored) the data size of the data completed transmission from the first data transmission/reception part 124 to the first interface 2. (hereinafter referred to as transmitted data) as a cumulative value among the total data (1 block) to be transmitted in response to the CBW issued based on the read command of the first device 1.

### (Retransmit data determination part 154)

The retransmission data determination unit 154 confirms the presence/absence of the retransmission flag set in the retransmitted data (hereinafter referred to as the retransmission data) among the transmission data from the second interface 4. As a result, the retransmission data determination part 154 performs the retransmission data determination process for determining whether or not the transmission data is the retransmission data.

### (Retransmit data processing part 156)

When the retransmission data processing part 156 determines the size of the transmitted data to the first interface 2 at the time of determining the retransmission data as the cumulative value Q based on the transmitted data information stored in the data information storage part 152 when the retransmission data determination part 154 determines that the transmission data from the second interface 4 is the retransmission data.

The retransmission data processing part 156 sequentially calculates the cumulative size (cumulative value P) of the retransmission data retransmitted from the second interface 4 to the second data transmission/reception part 134.

Furthermore, the retransmission data processing part 156 compares the cumulative size (cumulative value P) of the retransmission data with the transmitted data size (cumulative value Q), and executes a data reading/discarding process of reading and discarding the retransmission data by the decrement method until the retransmission data (cumulative value P) reaches the transmitted data size (cumulative value Q).

In this case, the retransmission data from the second interface 4 is transmitted in the same order as the normal transmission data. Therefore, when the size of the transmitted data (cumulative value Q) is discarded, only the duplicate data that has already been transmitted to the first interface 2 is appropriately discarded, and the retransmitted data is optimized.

For example, when the cumulative value Q is 70 bytes as the transmitted data size, if the cumulative value P of the retransmitted data is discarded until it reaches 70 bytes, the first interface 2 can receive only the untransmitted data among the retransmitted data, and duplicated data can be avoided. As a result, the data transmission process from the second interface 4 to the first interface 2 is appropriately executed.

### (Data communication determination part 17)

The data communication determination part 17 determines the communication status of data, etc. in the interface conversion device 10 by monitoring the data transmission/reception status of the first transmission/reception part 12 and the second transmission/reception part 13 of the connection destination. Specifically, the data communication determination unit 17 determines whether or not a command or data is transmitted/received by the first transmission/reception part 12 and the second transmission/reception part 13. The data communication determination part 17 can always determine the communication status, and can determine the communication status at the request of the first transmission/reception response control part 18, which will be described later.

### (First transmission/reception response control part 18)

When the first transmission/reception response control part (command rejection part) 18 receives the request for the power-saving mode transition (hereinafter referred to as the power-saving mode transition request) transmitted from the first device 1, the first transmission/reception response control part (command rejection unit) 18 rejects that request according to the conditions.

Here, the power-saving mode transition request is a request (command) transmitted by the operating system of the first device 1 (for example, the host computer) to the external device when transitioning to the power-saving mode at a predetermined opportunity. The power-saving mode transition request is transmitted to the first non-data transmission/reception part 122 via the first interface 2. Multiple power-saving mode transition requests are provided according to the degree of urgency. For example, U1, U2 and U3 requests are provided in the USB as power-saving mode transition requests, and the request restrictions are gradually strengthened in the order of U1, U2, and U3 requests.

When the interface conversion device 10 receives the power-saving mode transition request, the interface conversion device 10 transitions from the normal mode to the power-saving mode. When transitioning to the power-saving mode and during the power-saving mode, the transmission/reception processing of data, commands, etc. is stopped except for some power consumption related commands. Further, once the power-saving mode is entered, it takes time to return from the power-saving mode to the normal mode. Therefore, it is not possible to immediately return to the normal mode. Further, even during the return to the normal mode, the transmission/reception processing of data, commands, etc. is stopped as described above. Therefore, when transitioning to the power-saving mode and during the return to the normal mode, it may not be possible to properly transmit and receive the data.

The first transmission/reception response control part 18 solves the above problem.

The first transmission/reception response control part 18 determines whether or not the command received by the first non-data transmission/reception part 122 is a power-saving mode transition request. Further, when the first transmission/reception response control part 18 determines that the power-saving mode transition request has been received, the first transmission/reception response control part 18 refers to the determination of the communication status such as the data, etc. of the data communication determination part 17.

As a result, when the first transmission/reception response control part 18 receives the power-saving mode transition request and rejects the power-saving mode transition request when the first transmission/reception response control part 18 determines that there is the transmission/reception of data, etc. in the interface conversion device 10. On the other hand, the first transmission/reception response control part 18 accepts the power-saving mode transition request when the first transmission/reception response control part 18 determines that there is not the transmission/reception of data, etc. in the interface conversion device 10 even after receiving the power-saving mode transition request.

With the above configuration, the interface conversion device 10 can avoid the transition from the normal mode to the power-saving mode, maintain the normal mode, and can normally transmit and receive the data, etc. Further, when the interface conversion device 10 does not transmit/receive the data, etc., the power-saving of the interface conversion device 10 can be achieved by transitioning to the power-saving mode.

Note that the first transmission/reception response control part 18 can accept or reject the request depending on the urgency of the power-saving mode transition request. Specifically, the first transmission/reception response control part 18 can accept the power-saving mode transition request with high urgency and reject the power-saving mode transition request with low urgency. For example, the USB can reject anything other than the U3 request (U1 and U2 requests).

Further, the first transmission/reception response control part 18 can always reject the power-saving mode transition request without setting any conditions.

### (Flow of a series of process based on the read command)

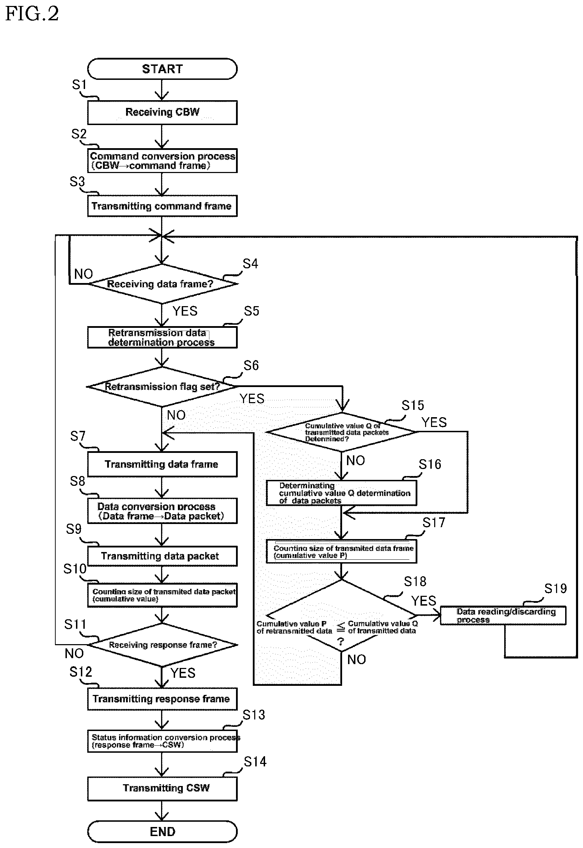

A series of processes of the interface conversion device 10 based on the read command of the first device 1 will be described with reference to FIG. 2.

### (Flow until the process is completed normally)

The first interface 2 transmits CBW based on the read command of the first device 1.

The first non-data transmission/reception part 122 of the interface conversion device 10 receives the CBW (step S 1) and transmits the received CBW to the non-data conversion part 112. The non-data conversion part 112 executes a command conversion process for converting the received CBW into a command frame (step S2). The second non-data transmission/reception part 132 transmits the converted command frame to the second interface 4 (step S3).

The second device 3 transmits one block of data frames via the second interface 4 based on the command frames received via the second interface 4.

If the second data transmission/reception part 134 receives the data frame (YES in step S4), the retransmission data determination part 154 executes the retransmission data determination process for the received data frame (step S5). As a result, if it is determined that the retransmission flag is not set in the received data frame (NO in step S6), the data reading/discarding process is not executed, and the second data transmission/reception part 134 transmits the data frame as it is to the data conversion unit 114 (step S7).

In step S4, unless the second data transmission/reception part 134 receives the data frame (NO in step S4), the subsequent processing is not executed.

The data conversion part 114 executes a data conversion process for converting the transmitted data frame into a data packet (step S8). The first data transmission/reception part 124 transmits the converted data packet to the first interface 2 (step S9). Based on the data packet transmission process by the first data transmission/reception part 124 to the first interface 2, the data information storage part 152 counts the size of the transmitted data packet as a cumulative value (step S10).

The second device 3 transmits the response frame after transmitting all the data frames for one block.

If the second non-data transmission/reception part 132 receives the response frame (YES in step S11), the second non-data transmission/reception part 132 transmits the received response frame to the non-data conversion part 112 (step S12). The non-data conversion part 112 executes a status information conversion process for converting the received response frame into CSW (step S13). The first non-data transmission/reception part 122 transmits the converted CSW to the first interface 2 (step S14). As a result, a series of processes is completed.

On the other hand, in step S11, if the second non-data transmission/reception part 132 does not receive the response frame (NO in step S12), the process of receiving the data frame is repeated by returning to step S4 until the response frame is received (until the data frame for one block is received).

### (Flow of data reading/discarding process on retransmission data)

If it is determined in the retransmission data determination process in step S5 that the retransmission flag is set in the data frame received by the second data transmission/reception part 134 (YES in step S6), the retransmission data processing part 156 determines the size of the transmitted data (data frame) to the first interface 2 at the time if it is determined that the retransmission data has been received as the cumulative value Q (step S16). The process of step S16 may be performed only at the timing that the data is first retransmitted. Therefore, in step S15 immediately before that, it is determined whether or not the cumulative value Q has already been determined, and if the cumulative value Q has already been determined (YES in step S15), the process of step S16 is omitted, if the cumulative value Q has not been determined (NO in step S15), the process of step S16 is executed.

The retransmission data processing part 156 counts the size of the retransmission data as the cumulative value P (step S17). The retransmission data processing part 156 compares the cumulative size of the retransmission data (cumulative value P) with the transmitted data size (cumulative value Q) determined in step S16. Subsequently, if the cumulative size of the retransmission data (cumulative value P) is the same as or smaller than the transmitted data size (cumulative value Q) (YES in step S18), the retransmission data processing part 156 determines executes the data reading/discarding process on the retransmitted data (step S19). After that, the process returns to step S4, a series of processes related to the retransmitted data is executed, and as long as YES continues in step S18, the data reading/discarding process is repeatedly executed.

On the other hand, if the cumulative size of the retransmitted data (cumulative value P) is larger than the transmitted data size (cumulative value Q) (NO in step S18), the data reading/discarding process is completed. Subsequently, the second data transmission/reception part 134 transmits the optimized retransmission data to the data conversion part 114 (step S7), and executes a series of subsequent processes.

### (Flow of a series of processes based on the power-saving mode transition request)

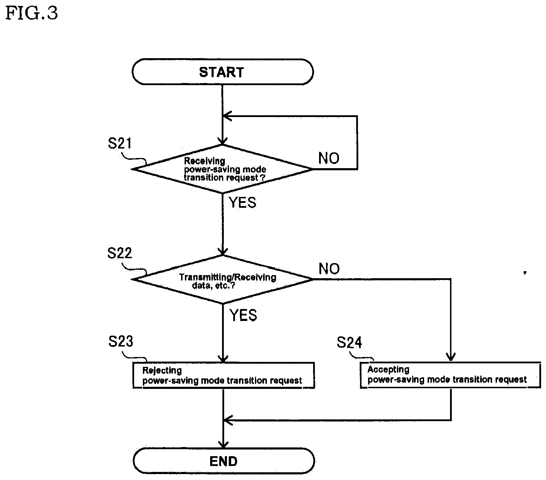

With reference to FIG. 3, a series of processes related to the interface conversion device 10 when the power-saving mode transition request is transmitted from the first device 1 will be described.

When the first device 1 transmits a power-saving mode transition request to the interface conversion device 10, the first non-data transmission/reception part 122 receives the request.

The first transmission/reception response control part 18 determines whether or not the first non-data transmission/reception part 122 has received the power-saving mode transition request. If it is determined that the request has been received (YES in step S21), the determination of the communication status such as data, etc. of the data communication determination part 17 is referred to. Further, if the interface conversion device 10 determines that there is the transmission/reception of data, etc. (YES in step S22), the first transmission/reception response control part 18 rejects the power-saving mode transition request (step S23), and a series of the process is completed.

On the other hand, even if it is determined in step S21 that the power-saving mode transition request has been received (YES in step S21), if it is determined that the interface conversion device 10 has no transmitted/received data, etc. (NO in step S22), the power-saving mode transition request is accepted (step S24), and a series of processes is completed.

In step S21, unless it is determined that the power-saving mode transition request has been received (NO in step S21), the subsequent process is not executed.

### (Flow of a series of processes on the entire configuration comprising the first device 1 and the second device 3)

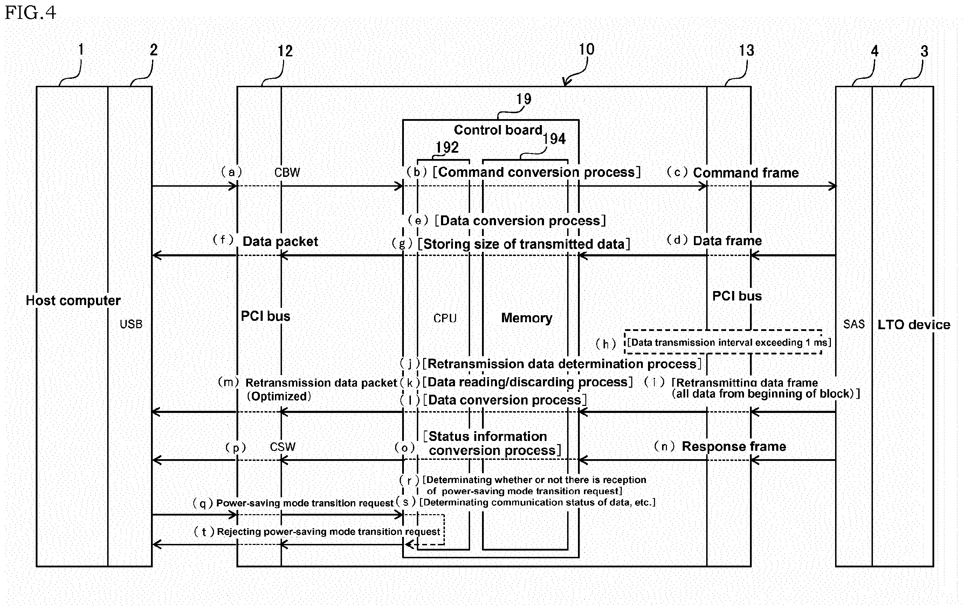

With reference to FIG. 4, a series of processes when the first device 1 reads the data of the second device 3 via the interface conversion device 10 and a process at the time of requesting the transition to the power-saving mode will be described.

In the following description, the first device 1 is a host computer 1, the first interface 2 is a USB 2, the second device 3 is an LTO device 3, the second interface 4 is a SAS 4, the first transmission/reception part 12 is a bus 12, the second transmission/reception part 13 is a bus 13, and the information conversion part 11 and the retransmission data management unit 15 is a control board 19. The control board 19 is composed of a CPU 192 and a memory 194.

As shown in FIG. 4 (a), the host computer 1 transmits the CBW including the data transmission request to the interface conversion device 10 via the USB2 based on the instruction of the operator. The bus 12 transmits the received CBW to the control board 19.

As shown in FIG. 4 (b), the control board 19 executes a command conversion process for converting the received CBW into a command frame. Further, as shown in FIG. 4 (c), the control board 19 transmits the converted command frame to the SAS 4 via the bus 13. The LTO device 3 receives a command frame via the SAS 4.

As shown in FIG. 4 (d), the LTO device 3 transmits a data frame to the interface conversion device 10 via the SAS 4 based on the command frame. The bus 13 transmits the received data frame to the control board 19.

As shown in FIG. 4 (e), the control board 19 executes a data conversion process of converting a received data frame into a data packet. Further, as shown in FIG. 4 (f), the control board 19 transmits the converted data packet to the USB 2 via the bus 12. As shown in FIG. 4 (g), the CPU 192 counts the size (cumulative value) of the transmitted data to the USB 2 and stores it in the memory 194.

The host computer 1 receives a data packet via the USB 2.

Here, since the data transmission speed of the SAS 4 is faster than the data transmission speed of the USB 2, as shown in FIG. 4 (h), when the data transmission standby time of the SAS 4 exceeds 1 ms, the data transmission is interrupted. As shown in FIG. 4 (i), the LTO device 3 retransmits the data frame from the beginning of the block via the SAS 4.

At this time, as shown in FIG. 4 (j), the CPU 192 of the control board 19 executes the retransmission data determination process for the data frame received via the bus 13. Further, as shown in FIG. 4 (k), when the CPU 192 determines that the received data frame is the retransmission data, the CPU 192 executes a data reading/discarding process of reading and discarding the data until the cumulative size of the retransmitted data reaches the transmitted data size before the retransmission stored in the memory 194. Subsequently, as shown in FIG. 4 (l), the control board 19 executes a data conversion process of converting a data packet of converting the read/discarded data frame to the data packet. Subsequently, as shown in FIG. 4 (m), the control board 19 transmits the retransmitted data optimized by executing the data conversion process to the USB 2 via the bus 12.

After transmitting all the data for one block, the LTO device 3 transmits the response frame to the interface conversion device 10 via the SAS 4 as shown in FIG. 4 (n). The bus 13 transmits the received response frame to the control board 19.

. As shown in FIG. 4 (o), the control board 19 executes a status information conversion process for converting the received response frame into the CSW. Subsequently, as shown in FIG. 4 (p), the control board 19 transmits the converted CSW to the USB 2 via the bus 12. The host computer 1 receives the CSW via the USB 2.

As described above, even when the data frame is retransmitted due to the transmission delay of more than 1 ms of the data frame, the retransmitted data can be processed appropriately, so that the data can be transmitted and received accurately.

As shown in FIG. 4 (q), when the host computer 1 transmits a power-saving mode transition request to the interface conversion device 10 via the USB 2, the CPU 192 that receives the request via the bus 12, as shown in FIG. 4 (r), determines whether or not the request is a power-saving mode transition request. Subsequently, as shown in FIG. 4 (s), the CPU 192 determines the communication status of the data, etc. in the interface conversion device 10, and if there is no transmission/reception of the data, etc., the CPU 192, as shown in FIG. 4 (t), rejects the power-saving mode transition request. If there is any transmission/reception of data etc., the CPU 192 accepts the power-saving mode transition request (not shown).

As described above, by rejecting the power-saving mode transition request, it is possible to avoid the problems such as a significant delay in data transmission/reception at the time of transition to the power-saving mode, and as a result, the data transmission/reception can be performed appropriately. Further, when there is no transmission/reception of data or the like, the power-saving of the interface conversion device 10 can be achieved by transitioning to the power-saving mode.

### (Second Embodiment)

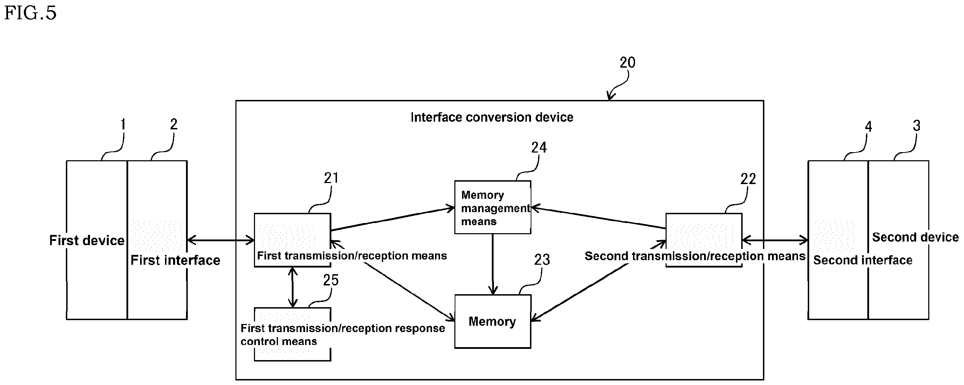

The interface conversion device 20 shown in FIG. 5 has the same function as the interface conversion device 10 of the first embodiment, but has different configuration requirements.

In the following description, the configuration requirements having the same name and the same reference numerals between the first embodiment and the second embodiment are identical with each other. Therefore, the description of the applicable configuration requirements is omitted.

### (Interface conversion device 20)

The interface conversion device 20 of the present embodiment has a USB transmission/reception means (first transmission/reception means) 21 connected to the first device 1 via USB 2, a SAS transmission/reception means (second transmission/reception means) 22 connected to the second device 3 via SAS 4, the memory 23 connected to the USB transmission/reception means 21 and the SAS transmission/reception means 22, the memory management means 24 connected to the USB transmission/reception means 21, the SAS transmission/reception means 22 and the memory 23, and a USB transmission/reception response control means (first transmission/reception response control means) 25 connected to the USB transmission/reception means 21.

### (USB transmission/reception means 21)

The USB transmission/reception means (first transmission/reception means) 21 transmits/receives the commands (CBW), the data (data packets), and the status information (CSW) related to the USB.

When the USB transmission/reception means 21 receives the command or the data from the first device 1, the USB transmission/reception means 21 deletes the information related to the interface (hereinafter referred to as interface information) of the USB and transmits (stores) the command information or the data from which the interface information has been deleted.to the memory 23. When the USB transmission/reception means 21 receives the command information whose interface information has been deleted or data, the USB transmission/reception means 21 adds the interface information related to the USB to the command information or the data, and transmits the command information or the data to the first device 1.

### (SAS transmission/reception means 22)

The SAS transmission/reception means (second transmission/reception means) 22 transmits/receives the commands (command frames), the data (data frames), and the status information (response frames) related to SAS.

When the SAS transmission/reception means 22 receives a command, the status information or the data from the second device 3, the SAS transmission/reception means 22 deletes the interface information related to the SAS and transmits (stores) the command information, the status information or the data from which the interface information has been deleted to the memory 23. Further, when the SAS transmission/reception means 22 receives the command information, the status information or the data from which the interface information has been deleted, the SAS transmission/reception means 22 adds the information of the interface related to SAS to the command information, the status information, or the data, and transmits those to the second device 3.

### (Memory 23)

The memory 23 temporarily stores the command information, the status information, and the data from which the interface information transmitted from the USB transmission/reception means 21 and the SAS transmission/reception means 22 has been deleted.

### (Memory management means 24)

The memory management means 24 determines the type of information (either command information, status information, or data) transmitted by the USB transmission/reception means 21 or the SAS transmission/reception means 22 to the memory 23, and determines the transmission destination based on the information regarding the transmission source of that information.

When the memory 23 receives (stores) the data, the memory management means 24 executes the process of dividing or combining the data in order to fit the transmission data size (transmission unit) of the data that fits one interface (transmission source) to the other interface (transmission destination). That is, the memory management means 24 adjusts the data size so that it can be the base data by the data frame unit or the data packet unit.

The memory management means 24 transmits the data stored in the memory 23 and whose data size is adjusted to the USB transmission/reception means 21 or the SAS transmission/reception means 22 which is the transmission destination.

In the present embodiment, the reading/discarding process for the retransmission data from the second device 3 is executed. Therefore, in addition to the above functions, the memory 23 has the function of the data information storage unit 152 of the first embodiment. In addition, the memory management means 24 has the functions of the retransmission data determination part 154 and the retransmission data processing unit 156 of the first embodiment.

With the above configuration, the memory 23 stores the data size of the transmitted data from the USB transmission/reception means 21 to the USB 2 as a cumulative value. Further, the memory management means 24 performs a retransmission data determination process on the data transmitted from the SAS 4. When it is determined that the retransmission flag is set, the memory management means 24 determines the cumulative value Q as the data size of the transmitted data stored in the memory 23 at that time. Further, the memory management means 24 calculates the cumulative size (cumulative value P) of the data sequentially retransmitted from the SAS 4 to the memory 23 via the SAS transmission/reception means 22. The memory management means 24 executes the data reading/discarding process for reading/discarding the retransmission data stored in the memory 23 by the decrement method until the cumulative size (cumulative value P) of the retransmission data reaches the transmitted data size (cumulative value Q).

### (USB transmission/reception response control means 25)

The USB transmission/reception response control means (first transmission/reception response control means) 25 has the same function as the first transmission/reception response control part 18 in the first embodiment. The memory management means 24 has a function equivalent to that of the data communication determination part 17 in the first embodiment.

With the above configuration, the power-saving mode transition request can be appropriately processed (rejected or accepted), and the data can be appropriately transmitted and received. Further, the power-saving of the interface conversion device 10 can be achieved.

### (Flow of a series of process based on the read command)

The first device 1 transmits the CBW to the interface conversion device 20 via the USB 2 based on the read command. The USB transmission/reception means 21 deletes the interface information related to the USB from the received CBW, and transmits (stores) only the command information to the memory 23. The memory management means 24 determines the type and transmission destination of the information transmitted to the memory 23, and transmits the command information to the SAS transmission/reception means 22 of the transmission destination. The SAS transmission/reception means 22 adds the interface information related to the SAS to the received command information, and transmits that information as the command frame to the second device 3 via the SAS 2.

The second device 3 transmits a data frame to the interface conversion device 20 via the SAS 4 based on the received command frame. The SAS transmission/reception means 22 deletes the interface information related to the SAS from the received data frame, and transmits (stores) only the data to the memory 23. At this time, the memory management means 24 determines the type and transmission destination of the information transmitted to the memory 23. When the memory management means 24 determines that the transmitted information is the data, the memory management means 24 changes (divides or combines) the data stored in the memory 23 to the transmission data size suitable for the USB, and transmits the changed data to the USB transmission/reception means 21 of the transmission destination. The USB transmission/reception means 21 adds the interface information related to the USB to the received data, and transmits such received data as the data packet to the first device 1 via the USB 2.

When one block of the data frame is transmitted to the interface conversion device 20, the second device 3 transmits the response frame to the interface conversion device 20 via the SAS 4. The SAS transmission/reception means 22 deletes the interface information related to the SAS from the received response frame, and transmits (stores) only the status information to the memory 23. At this time, the memory management means 24 determines the type and transmission destination of the information transmitted to the memory 23, and transmits the status information to the USB transmission/reception means 21 of the transmission destination. The USB transmission/reception means 21 adds the interface information related to the USB to the received status information, and transmits such received status information as a CSW to the first device 1 via the USB 2.

### (Flow of a series of process for the power-saving mode transition request)

When the first device 1 transmits a power-saving mode transition request to the USB transmission/reception means 21, the USB transmission/reception response control means 25 refers to the determination of the communication status of the data, etc. by the memory management means 24. If the data, etc. is not transmitted/received, the USB transmission/reception response control means 25 accepts the power-saving mode transition request. If the data, etc. is transmitted and received, the power-saving mode transition request is rejected.

### (Third Embodiment)

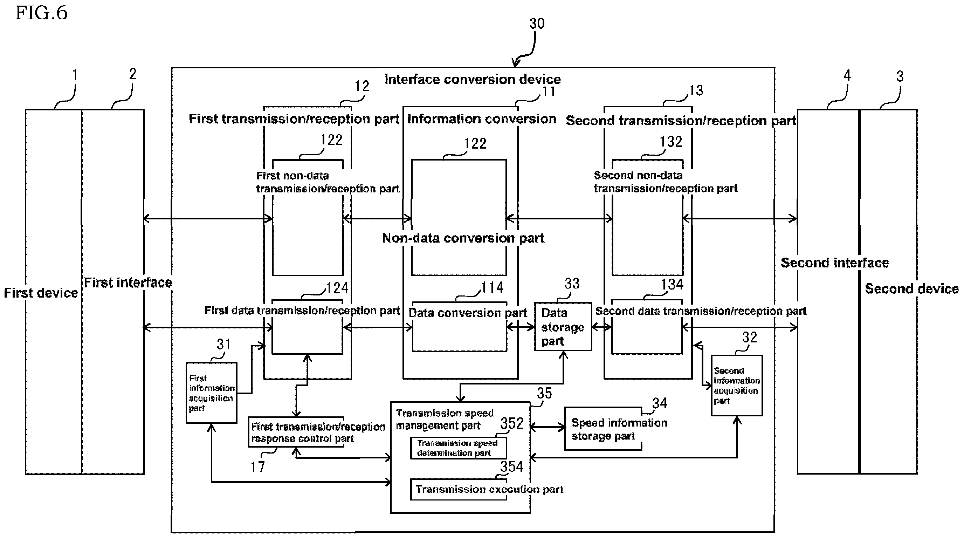

The interface conversion device 30 shown in FIG. 6 comprises the configuration requirements to optimize the speed of the data transmitted from the second interface 4 instead of the retransmission data management part 15 of the interface conversion device 10 in the first embodiment.

In the following description, the configuration requirements having the same name and the same reference numerals between the first embodiment and the third embodiment are identical with each other. Therefore, the description of the applicable configuration requirements is omitted.

### (Interface conversion device 30)

The interface conversion device 30 of the present embodiment has a first information acquisition part 31 connected to the first transmission/reception part 12, a second information acquisition part 32 connected to the second transmission/reception part 13, a data storage part 33 connected to the second data transmission/reception part 134 and the conversion part 114, a speed information storage part 34, a transmission speed management part 35 connected to the first information acquisition part 31, the second information acquisition part 32, the data storage part 33, and the speed information storage part 34.

### (First information acquisition part 31)

The first information acquisition part 31 acquires the type and version information of the communication standard related to the first interface 2 via the first transmission/reception part 12. Further, the first information acquisition part 31 acquires the information regarding the transmission status (transmission speed, transmission standby time) of the data packet between the first interface 2 and the first data transmission/reception part 124.

### (Second information acquisition part 32)

The second information acquisition unit 32 acquires the type and version information of the communication standard related to the second interface 4 via the second transmission/reception unit 13. Further, the second information acquisition part 32 acquires the information related to the transmission status (transmission speed, transmission standby time) of the data frame between the second interface 4 and the second data transmission/reception part 134.

### (Data storage part 33)

The data storage part 33 temporarily stores the data frame from the second data transmission/reception part 134. The data storage part 33 has a buffer function for adjusting the speed of the data frame.

### (Speed information storage part 34)

The speed information storage part 34 stores the information related to the maximum transmission speed (theoretical value) of the data according to the version of the communication standard in advance, and newly stores the reference speed, the stable speed, the optimum speed, etc., which will be described later.

### (Transmission speed management part 35)

The transmission speed management part 35 determines the optimum speed for transmitting the data frame temporarily stored in the data storage part 33, and controls the data to be transmitted at the determined optimum speed.

As shown in FIG. 6, the transmission speed management part 35 includes a transmission speed determination part 352 and a transmission execution part 354.

### (Transmission speed determination part 352)

When the speed information storage unit 34 does not store the optimum speed described later, the transmission speed determination part 352 determines the reference speed (first reference speed and second reference speed) described later, and determines the optimum speed based on these reference speeds.

The transmission speed determination part 352 determines the maximum transmission speed (theoretical value) of the first interface 2 and the second interface 4 based on the information on communication standards acquired by the first information acquisition part 31 and the second information acquisition part 32 (for example, USB 3.0, SAS 4.0, etc.) and the information on the maximum transmission speed (theoretical value) of each communication standard stored in the speed information storage part 34. The transmission speed management part 35 of the present embodiment determines the determined maximum transmission speed (theoretical value) of the data in the first interface (USB) 2 as the first reference speed.

The transmission speed determination part 352 determines the actual transmission speed (actual measurement value) of the data packet in the first interface (USB) 2 acquired by the first information acquisition part 31 as the second reference speed.

The transmission speed determination part 352 stores the determined first reference speed and the second reference speed in the speed information storage part 34.

Here, since the transmission speed of data in the interface conversion device 20 according to the operating status (CPU and memory usage rate) varies, it is difficult for the interface conversion device 20 to determine the optimum speed to one value.

In the present embodiment, the second reference speed, which is the actual transmission speed (actual measurement value) of the data packet in the first interface (USB) 2, is set to 0, and the optimum speed is determined in the range of an absolute value for the first reference speed ± α, that is, the range of "first reference speed-α ≤ second reference speed ≤ first reference speed + α". Here, α is a rate constant that enables the stable communication between the first interface 2 and the second interface 4. α is determined by the communication status between the first interface 2 and the second interface 4, the specifications of the first interface 2 and the second interface 4, and the like. For example, α can be 30% or less of the data transmission speed in the second data transmission/reception part 134. However, the value of α is not limited to this. In particular, α may be a value as long as the data transmission standby time of the second data transmission/reception part 134 does not exceed 1 ms when the upper limit "first reference speed + α" is set as the optimum speed.

The transmission speed determination part 352 determines the operating status (CPU and memory usage rate) of the interface conversion device 20, and determines the optimum speed in the range of "first reference speed-α ≤ second reference speed ≤ first reference speed+ α" according to the operating status. The transmission speed determination part 352 stores the determined optimum speed in the speed information storage part 34.

When the interface conversion device 30 is in the initial state and the second reference speed is not stored in the speed information storage part 34, the transmission speed determination part 352 transmits the transmission request of a test data to the first device 1, then, sets the transmission speed (actual measurement value) of the test data transmitted from the first device 1 that has received the request as the second reference speed.

### (Transmission execution part 354)

The transmission execution part 354 transmits the data frame stored in the data storage part 33 to the data conversion part 114 at the optimum speed.

With the above configuration, the interface conversion device 30 optimizes the speed of the data transmitted from the second interface 4 to increase the data transmission speed as much as possible. The interface conversion device 30 can prevent the data from being retransmitted from the second device 3 due to the difference in the data transmission speed between the interfaces. That is, the cause of inappropriate data transmission/reception can be eliminated, and the data transmission/reception can be performed appropriately.

The transmission speed management part 35 has the function of the data communication determination part 17 in the first embodiment, and is connected to the first transmission/reception response control part 18. Therefore, in the present embodiment, the data communication determination part 17 is omitted. The first transmission/reception response control part 18 can reject the power-saving mode transition request according to the communication status of the data in the interface conversion device 10 determined by the transmission speed management part 35 instead of the data communication determination part 17.

### LIST OF REFERENCE INDICATORS

1 First device (host computer)
2 First interface (USB)
3 Second device (LTO device)
4 Second interface (SAS)
10 Interface conversion device
11 Information conversion part
12 First transmission/reception part (bus)
13 Second transmission/reception part (bus)
15 Retransmission data management part
17 Data communication determination part
18 First transmission/reception response control part
19 Control board
20 Interface conversion device
21 USB transmission/reception means
22 SAS transmission/reception means
23 Memory
24 Memory management means
25 USB transmission/reception response control means
30 Interface conversion device
31 First information acquisition part
32 Second information acquisition part
33 Data storage part
34 Speed information storage part
35 Transmission speed management part
112 Non-data conversion part
114 Data conversion part
122 First non-data transmission/reception part
124 First data transmission/reception part
132 Second non-data transmission/reception part
134 Second data transmission/reception part
152 Data information storage part
154 Retransmission data determination part
156 Retransmission data processing part
192 CPU
194 memory
352 Transmission speed determination part
354 Transmission execution part

## Claims

1. An interface conversion device (10) that enables the communication between a first device (1) having a first interface (2) and a second device (3) having a second interface (4) with a data transmission speed faster than that of the first interface (2) comprising:
a first transmission/reception part (12) connected to the first interface (2);
a second transmission/reception part (13) connected to the second interface (4);
a data storage part (33) connected to the second transmission/reception part (13), and storing the data transmitted from the second transmission/reception part (13);
an information conversion part (11) connected to the first transmission/reception part (12) and the data storage part (33), and at least converting the data transmitted from the second interface (4) stored in the data storage part (33) so as to fit the first interface (2);
a first information acquisition part (31) connected to the first transmission/reception part (12),
and acquiring the information related to the data transmission speed of the first interface (2); and
a transmission speed management part (35) determining the optimum data transmission speed related to the second interface (4) based on the information acquired by the first information acquisition part (31),
wherein the transmission speed management part (35) determines a first reference speed based on the type and version information of the communication standard related to the first interface (2) acquired by the first information acquisition part (31), **characterized in that**
the transmission speed management part (35) determines the actual data transmission speed of the first interface (2) as a second reference speed, and determines the optimum speed in the range of an absolute value for the first reference speed ± α, that is the first reference speed -α ≦ the second reference speed ≦ the first reference speed + α,
the α is a rate constant that enables the communication between the first interface (2) and the second interface (4) without the data transmission standby time of the second transmission/reception part (13) exceeding 1 ms,
the α is determined by the communication state between the first interface (2) and the second interface (4), the specifications of the first interface (2) and the second interface (4), and the like.

2. The interface conversion device (10) according to claim 1, further comprising a command rejection part determining a type of a command transmitted from the first interface device, enabling to reject a power-saving mode transition request when the determined command corresponds to the power-saving mode transition request requesting the transition to the power-saving mode.

3. The interface conversion device (10) according to claim 1, further comprising a command rejection part determining a type of a command transmitted from the first interface device, and determining the urgency of a power-saving mode transition request when the determined command corresponds to the power-saving mode transition request requesting the transition to the power-saving mode, and accepting the power-saving mode transition request if it is determined that the power-saving mode transition request is highly urgent, and rejecting the power-saving mode transition request if it is determined that the power-saving mode transition request is lowly urgent.

4. The interface conversion device (10) according to claim 1, further comprising a command rejection part determining a type of a command transmitted from the first interface device, and determining whether accepting and rejecting a power-saving mode transition request according to the communication status of the data in the interface conversion device when the determined command corresponds to the power-saving mode transition request, and rejecting the power-saving mode transition request if it is determined that there is any data communication, and accepting the power-saving mode transition request if it is determined that there is no data communication.

## Patentansprüche

1. Eine Schnittstellenumwandlungsvorrichtung (10), die die Kommunikation zwischen einer ersten Vorrichtung (1) mit einer ersten Schnittstelle (2) und einer zweiten Vorrichtung (3) mit einer zweiten Schnittstelle (4) mit einer Datenübertragungsgeschwindigkeit ermöglicht, die schneller als die der ersten Schnittstelle (2) ist, umfassend:
einen ersten Sende-/Empfangsteil (12), der mit der ersten Schnittstelle (2) verbunden ist;
einen zweiten Sende-/Empfangsteil (13), der mit der zweiten Schnittstelle (4) verbunden ist;
einen Datenspeicherteil (33), der mit dem zweiten Sende-/Empfangsteil (13) verbunden ist und die vom zweiten Sende-/Empfangsteil (13) gesendeten Daten speichert;
einen Informationsumwandlungsteil (11), der mit dem ersten Sende-/Empfangsteil (12) und dem Datenspeicherteil (33) verbunden ist und zumindest die von der zweiten Schnittstelle (4) übertragenen und im Datenspeicherteil (33) gespeicherten Daten so umwandelt, dass sie zur ersten Schnittstelle (2) passen;
einen ersten Informationserfassungsteil (31), der mit dem ersten Sende-/Empfangsteil (12) verbunden ist und die Informationen bezüglich der Datenübertragungsgeschwindigkeit der ersten Schnittstelle (2) erfasst; und
einen Übertragungsgeschwindigkeitsverwaltungsteil (35), der die optimale Datenübertragungsgeschwindigkeit in Bezug auf die zweite Schnittstelle (4) basierend auf den vom ersten Informationserfassungsteil (31) erfassten Informationen bestimmt,
wobei der Übertragungsgeschwindigkeitsverwaltungsteil (35) eine erste Referenzgeschwindigkeit basierend auf den Typ- und Versionsinformationen des Kommunikationsstandards in Bezug auf die erste Schnittstelle (2) bestimmt, die vom ersten Informationserfassungsteil (31) erfasst wurden, **dadurch gekennzeichnet, dass** der Übertragungsgeschwindigkeitsverwaltungsteil (35) die tatsächliche Datenübertragungsgeschwindigkeit der ersten Schnittstelle (2) als eine zweite Referenzgeschwindigkeit bestimmt, und die optimale Geschwindigkeit im Bereich eines Absolutwertes für die erste Referenzgeschwindigkeit ± α bestimmt, das heißt die erste Referenzgeschwindigkeit -α ≦ der zweiten Referenzgeschwindigkeit ≦ der ersten Referenzgeschwindigkeit +α, das α ist eine Geschwindigkeitskonstante, die die Kommunikation zwischen der ersten Schnittstelle (2) und der zweiten Schnittstelle (4) ermöglicht, ohne dass die Datenübertragungsbereitschaftszeit des zweiten Sende-/Empfangsteils (13) 1 ms überschreitet,
das α wird durch den Kommunikationsstatus zwischen der ersten Schnittstelle (2) und der zweiten Schnittstelle (4), den Spezifikationen der ersten Schnittstelle (2) und der zweiten Schnittstelle (4) und dergleichen bestimmt.

2. Schnittstellenumwandlungsvorrichtung (10) nach Anspruch 1, außerdem umfassend einen Befehlsablehnungsteil, der einen Typ eines von der ersten Schnittstellenvorrichtung übertragenen Befehls bestimmt und es ermöglicht, eine Energiesparmodus-Übergangsanforderung abzulehnen, wenn der bestimmte Befehl dem Energiesparmodus-Übergangsanforderung, die den Übergang in den Energiesparmodus anfordert, entspricht.

3. Schnittstellenumwandlungsvorrichtung (10) nach Anspruch 1, außerdem umfassend einen Befehlsablehnungsteil, der einen Typ eines von der ersten Schnittstellenvorrichtung übertragenen Befehls bestimmt und die Dringlichkeit einer Energiesparmodus-Übergangsanforderung bestimmt, wenn der bestimmte Befehl der Energiesparmodus-Übergangsanforderung, die den Übergang in den Energiesparmodus anfordert, entspricht, und die Energiesparmodus-Übergangsanforderung annimmt, wenn bestimmt wird, dass die Energiesparmodus-Übergangsanforderung sehr dringend ist, und die Energiesparmodus-Übergangsanforderung ablehnt, wenn bestimmt wird, dass die Energiesparmodus-Übergangsanforderung von geringer Dringlichkeit ist.

4. Schnittstellenumwandlungsvorrichtung (10) nach Anspruch 1, außerdem umfassend einen Befehlsablehnungsteil, der einen Typ eines von der ersten Schnittstellenvorrichtung übertragenen Befehls bestimmt, und bestimmt, ob eine Energiesparmodus-Übergangsanforderung gemäß dem KommunikationsStatus der Daten in der Schnittstellenumwandlungsvorrichtung annimmt oder abgelehnt wird, wenn der bestimmte Befehl dem Energiesparmodus-Übergangsanforderung entspricht, und die Energiesparmodus-Übergangsanforderung ablehnt, wenn festgestellt wird, dass eine Datenkommunikation vorliegt, und die Energiesparmodus-Übergangsanforderung annimmt, wenn festgestellt wird, dass keine Datenkommunikation stattfindet.

## Revendications

1. Dispositif de conversion d'interface (10) qui permet la communication entre un premier dispositif (1) ayant une première interface (2) et un second dispositif (3) ayant une seconde interface (4) avec un débit de transmission de données plus rapide que celle de la première interface (2), comprenant :
une première partie de transmission/réception (12) connectée à la première interface (2) ;
une seconde partie de transmission/réception (13) connectée à la seconde interface (4) ;
une partie de stockage de données (33) connectée à la seconde partie de transmission/réception (13) et stockant les données transmises par la seconde partie de transmission/réception (13) ;
une partie de conversion d'informations (11) connectée à la première partie de transmission/réception (12) et à la partie de stockage de données (33), et convertissant au moins les données transmises par la seconde interface (4) stockées dans la partie de stockage de données (33) afin de les adapter à la première interface (2) ;
une première partie d'acquisition d'informations (31) connectée à la première partie de transmission/réception (12), et acquérant les informations relatives au débit de transmission de données de la première interface (2) ; et
une partie de gestion de débit de transmission (35) qui détermine le débit de transmission de données optimal relatif à la seconde interface (4) sur la base des informations acquises par la première partie d'acquisition d'informations (31),
dans lequel la partie de gestion de débit de transmission (35) détermine un premier débit de référence sur la base des informations relatives au type et à la version de la norme de communication relative à la première interface (2) acquises par la première partie d'acquisition d'informations (31), **caractérisé en ce que**
la partie de gestion de débit de transmission (35) détermine le débit de transmission de donnée réel de la première interface (2) comme second débit de référence, et détermine le débit optimal dans la plage d'une valeur absolue pour le premier débit de référence ± α, c'est-à-dire le premier débit de référence -α ≦ le second débit de référence ≦ le premier débit de référence + α, le α est une constante de vitesse qui permet la communication entre la première interface (2) et la seconde interface (4) sans que le temps d'attente de transmission de données de la seconde partie de transmission/réception (13) ne soit supérieur à 1 ms,
le α est déterminé par l'état de communication entre la première interface (2) et la seconde interface (4), les spécifications de la première interface (2) et de la seconde interface (4), etc.

2. Dispositif de conversion d'interface (10) selon la revendication 1, comprenant en outre une partie de rejet de commande déterminant un type d'une commande transmise par le premier dispositif d'interface, permettant de rejeter une demande de transition en mode d'économie d'énergie lorsque la commande déterminée correspond à la demande de transition en mode d'économie d'énergie demandant la transition vers le mode d'économie d'énergie.

3. Dispositif de conversion d'interface (10) selon la revendication 1, comprenant en outre une partie de rejet de commande déterminant un type d'une commande transmise par le premier dispositif d'interface, et déterminant l'urgence d'une demande de transition en mode d'économie d'énergie lorsque la commande déterminée correspond à la demande de transition en mode d'économie d'énergie demandant la transition vers le mode d'économie d'énergie, et acceptant la demande de transition en mode d'économie d'énergie s'il est déterminé que la demande de transition en mode d'économie d'énergie est très urgente, et rejetant la demande de transition en mode d'économie d'énergie s'il est déterminé que la demande de transition en mode d'économie d'énergie est faiblement urgente.

4. Dispositif de conversion d'interface (10) selon la revendication 1, comprenant en outre une partie de rejet de commande déterminant un type d'une commande transmise par le premier dispositif d'interface, et déterminant si l'acceptation et le rejet d'une demande de transition en mode d'économie d'énergie en fonction de l'état de communication des données dans le dispositif de conversion d'interface lorsque la commande déterminée correspond à la demande de transition en mode d'économie d'énergie, et rejetant la demande de transition en mode d'économie d'énergie s'il est déterminé qu'il y a une communication de données, et acceptant la demande de transition en mode d'économie d'énergie s'il est déterminé qu'il n'y a pas de communication de données.
